# EUROPEAN PATENT APPLICATION

(11) **EP 1 083 757 A2**
(43) Date of publication of application: **14.03.2001**
(21) Application number: 00307824.3
(22) Date of filing: 11.09.2000
(51) Int. Cl.: H04N 13/04, H04N 13/00

(54) **Stereoscopic image display apparatus**

(30) Priority: 09.09.1999 KR 9938396
(71) Applicant: LG ELECTRONICS INC., Seoul (KR)
(72) Inventor: Doudnikov, Sergey, St. Petersburg 191123 (RU)
(74) Representative: McLeish, Nicholas Alistair Maxwell

(57) **Abstract**

The present invention relates to a three-dimensional integral image display system for displaying a three-dimensional integral image in real time. The three-dimensional integral image display system includes: a plurality of two dimensional aspectograms displayed in real time; a projector for projecting the plurality of two dimensional aspectograms after adjusting a magnifying power and a focal distance; and a micro-lens array for reproducing 3 dimensional integral image by combining the plurality of two dimensional aspectograms projected from the projector. Herein, a resolution the three-dimensional integral image is determined by a distance between a focal plane of the projector and a focal plane of the micro-lens array. The projector adjusts and projects both the magnifying power and the focal distance of the two dimensional aspectograms. The three dimenesional integral image display system in accordance with the present invention can display the three-dimensional integral image having a higher resolution and deeper depth feeling because of adjusting the resolution and the size of the three-dimensional integral image at same time as compared with a conventional method in which a resolution and a size of a three-dimensional integral image are contrary to each other.

## Description

### BACKGROUND OF THE INVENTION

### 1. Field of the Invention

The present invention relates to a three dimensional integral image display system for displaying a three-dimensional integral image in real time.

### 2. Description of the Related Art

At present, three-dimensional integral image process technology has been widely used for education, training, medical service, movies, up to computer games. The advantage of the three-dimensional integral image technology can provide more presence feeling, real feeling, and natural feeling as compared with two dimensional integral image technology.

There are having been engaged lots of studies to realize such three-dimensional integral image display system in the field.

To realize the three-dimensional integral image display system, it is required various technology including input technology, process technology, transmit technology, display technology and software technology. Studies of display technology, digital integral image process technology, computer graphic technology, human visual system are in particular required.

A basic method for using the three-dimensional integral image display system is to use glasses. For example, there are a colour separation method using different waves of light through sunglasses, a polarized glass method using different vibration directions of light, and a liquid crystal shutter method dividing right and left integral images in time division manner.

Using glasses has the advantage of providing clearness in image quality but has two critical disadvantages as well.

First, wearing glasses is inconvenient in itself. Second, it is possible to be conscious of places far and near only from a fixed point of view. Here, studies for anti-glass three-dimensional integral image display are actively engaged in.

The anti-glass three-dimensional integral image display is a method for dividing right and left integral images without using glasses, in particular dividing the integral image corresponding to right and left eye from a specific observation point using a Parallax barrier, a Lenticular plate, and a Fly eye lens plate.

More description of the above method will be explained as below.

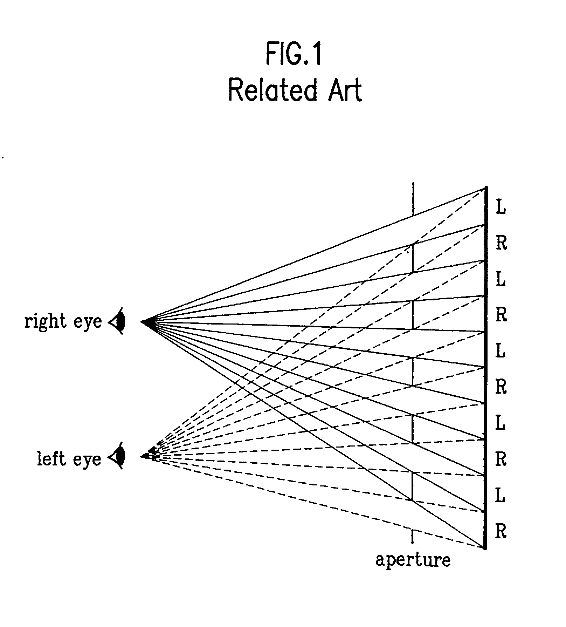

First, a Parallax Barrier method as shown in FIG. 1 arranges a parallax barrier having a vertically lattice aperture ahead of a left image (L) and a right image (R) corresponding to observer's right and left eyes and thereafter observes things by dividing the images through the parallax barrier aperture.

However, it has a problem that brightness of the three-dimensional integral image deteriorates and a resolution and three-dimensional depth feeling are inferior in quality because of image observations through the parallax barrier aperture.

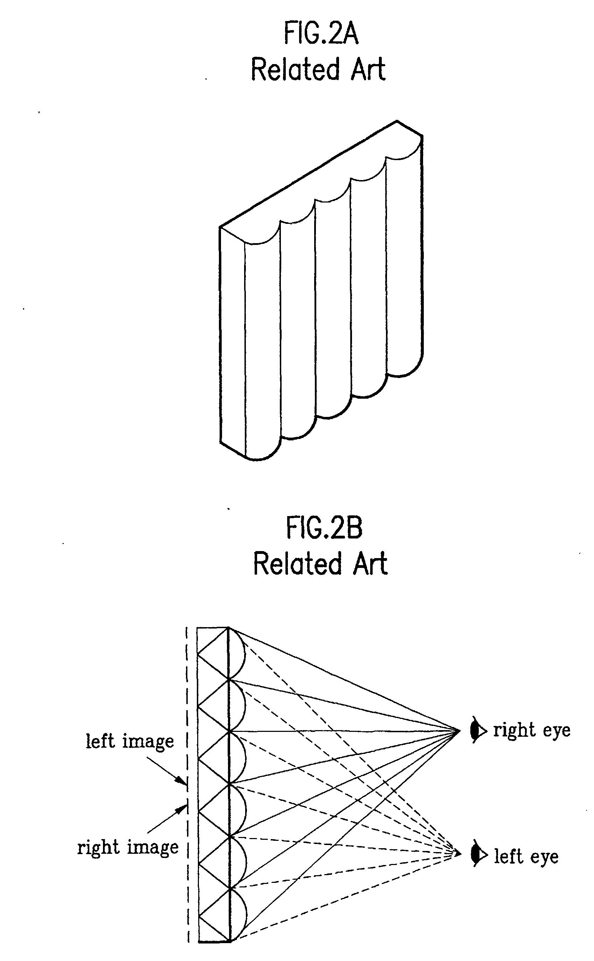

Next, a Lenticular method is very similar to the parallax barrier method but is different in terms of the fact that the lenticular method uses a half-round cylinder lens-arranged lenticular plate instead of a vertically lattice parallax barrier as shown in FIG. 2.

This method observes things through the lens by arranging a left image and a right image corresponding to observer's right and left eyes on a focal plane of the lens.

The image deflected through the lens is divided into images in both right and left eyes according to the inclination property of the lens thereby looking like three-dimensional.

However, this method has also problem that using a camera lens of smaller diameter to record multi images as much as possible makes image quality and resolution deteriorating due to narrower width of the film.

Further, the lenticular method can drive three-dimensional image only from right and left direction. It has no information of up-and-down direction, resulting in deteriorating the tree dimensional depth feeling.

An Integral Photography overcoming the problem is a method for realizing the real image by recording entire three-dimensional image on a copy of photosensitive film.

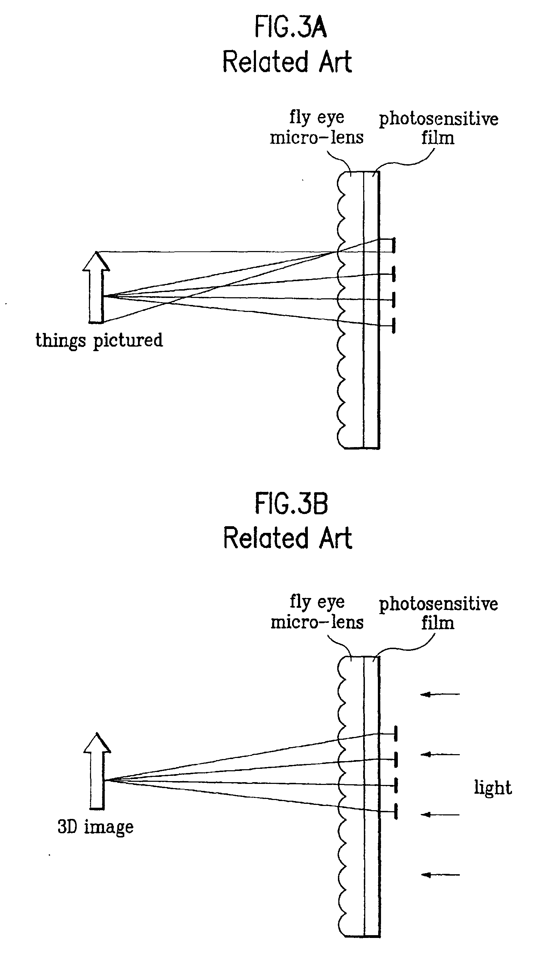

The method arranges a fly eye micro-lens array ahead of the copy of photosensitive film as shown in FIG. 3 and then records lots of aspectograms of things pictured through respective lens on the photosensitive film.

If throwing a light from behind of the photosensitive film, each aspectogram recorded on the photosensitive film is progressed in the same path as things pictured thereof and realize a three-dimensional real image on the original position of the things pictured.

However, this method has a problem of deteriorating a resolution of the three-dimensional integral image since the micro-lens number of a micro-lens array, the size of each micro-lens and the size of the three-dimensional integral image displayed through the micro-lens array are mismatched each other.

That is, the smaller micro-lens in order to increase a resolution, the smaller three-dimensional integral image. The larger micro-lens in order to increase the size of the dimensional integral image, the lower resolution. If number and size of the micro-lens are increased in order to enhance the resolution and the size of the three-dimensional integral image, costs for manufacturing the micro-lens array considerably increases.

To overcome this problem, a method for using a medium having a high resolution has been attempted ending in failure of providing requested depth feeling and resolution of the three-dimensional integral image.

### SUMMARY OF THE INVENTION

It would be desirable to provide a three-dimensional integral image display system capable of displaying two dimensional integral image in real time as three-dimensional integral image having a high resolution and depth feeling.

It would also be desirable to provide a three-dimensional integral image display system both controlling the resolution and the size of the displayed three-dimensional integral image.

It would also be desirable to provide a three-dimensional integral image display system to minimize manufacturing costs by optimizing micro-lens number of a micro-lens array.

A three-dimensional integral image display system in accordance with the present invention includes a plurality of two dimensional aspectograms displayed in real time, a projector for projecting by adjusting a magnifying power and a focal distance of two dimensional aspectrograms and a micro-lens array for reconstructing three-dimensional integral image by synthesizing the plurality of two dimensional aspectograms projected from the projector.

Herein, the resolution the three-dimensional integral image is determined by a distance between a focal plane of the projector and a focal plane of the micro-lens array. The projector adjusts and projects both the magnifying power and the focal distance of the two dimensional aspectograms.

Embodiments of the invention can display the three-dimensional integral image having a higher resolution and depth feeling because of adjusting the resolution and the size of the three-dimensional integral image at same time as compared with a conventional method in which a resolution and a size of a three-dimensional integral image are contrary to each other. Further, total manufacturing costs are saved due to use of an optimum number of micro-lens array.

A diffused screen for enlarging two dimensional aspectograms between the projector and the micro-lens can be additionally placed.

Here, the diffused screen is placed within a focal plane of the two dimensional aspectograms.

The reason to use the diffused screen in embodiments of the invention is to enlarge a viewing angle and to provide more comfortable view feeling.

Besides, a projector embodying the invention can adjust the focal distance by moving the micro-lens array without adjusting the focal distance of two dimensional aspectograms.

For this, a drive section for moving the micro-lens array can be additionally included in embodiments of the invention. The drive section includes one of a comb drive using electrostatic power, a shape-memorable alloy which generates a displacement according to a temperature variation, and a piezo-actuator using a displacement of a piezo-material.

### BRIEF DESCRIPTION OF THE DRAWINGS

FIG. 1 to FIG 3 are views illustrating three-dimensional integral image display methods according to a related art.

FIG. 4 is a sketch view showing a three-dimensional integral image display system according to a preferred embodiment of the present invention.

FIG. 5 is a sketch view showing a three-dimensional integral image display system according to another preferred embodiment of the present invention.

FIG. 6 is a cross section view showing a television structure applying the system of FIG. 4.

### DETAILED DESCRIPTION OF THE PREFERRED EMBODIMENTS

A preferred embodiment of the present invention will be described hereinbelow with reference to the accompanying drawings.

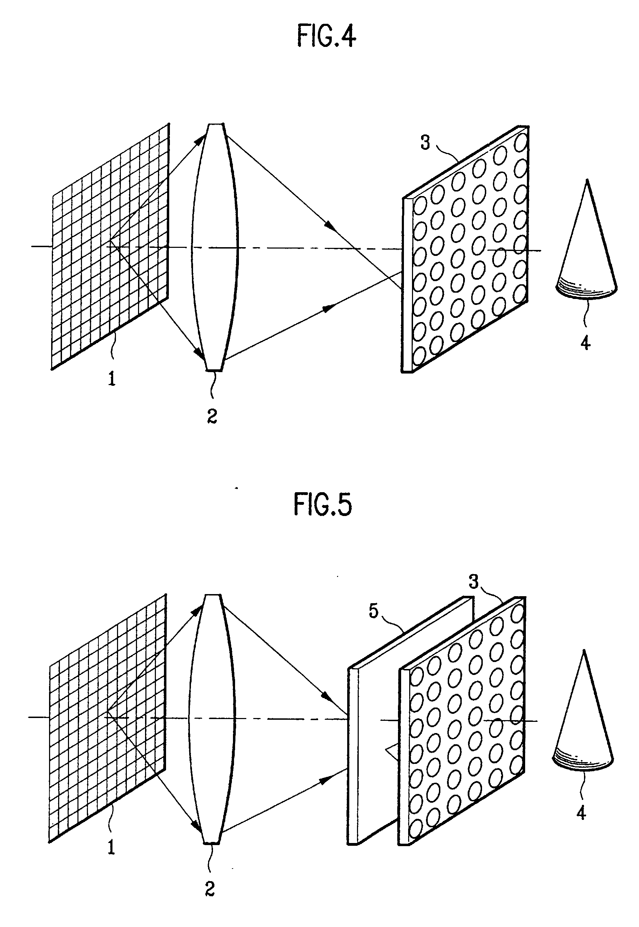

FIG. 4 is a sketch view showing a three-dimensional integral image display system according to an embodiment of the present invention. The three-dimensional integral image display system includes: a display panel 1 for displaying two dimensional integral image in real time including LCD or PDP as shown in FIG. 4; a projector 2 for projecting the two dimensional integral image at a constant distance and micro-lens array 3 for synthesizing the two dimensional integral image with the three-dimensional integral image.

Here, the two dimensional integral images provided in real time from the display panel are two dimensional aspectograms stored after dividing real images.

Thereafter, the projector 2 adjusts the magnifying power of the two dimensional aspectograms provided from the display panel to display an optimum three-dimensional integral image and also adjusts distance between a focal plane of two dimensional aspectograms and a focal plane of the micro-lens array.

The micro-lens array 3 includes a plurality of hemispheric micro-lenses the number of which is optimally determined according to the resolution and the magnifying power of the three-dimensional integral image 4.

The operation of the embodiment in accordance with the present invention will be described as below.

First, the projector 2 projects two dimensional aspectograms around the focal plane of the micro-lens array 3 after receiving the two dimensional aspectograms from the display panel 1. The two dimensional aspectograms display the three-dimensional integral image 4 while passing through the lenses of the micro-lens array 3 and being synthesized in the progress.

Next, the projector 2 optimally adjusts the resolution, the depth and the size of the displayed three-dimensional integral image 4 by adjusting the magnifying power and the focal distance.

Herein, since the projector 2 adjusts the focal distance of the two dimensional aspectograms corresponding to the magnifying power, the focal plane of the two dimensional aspectograms and the focal plane of the micro-lens array are not identical to each other. In other words, the resolution of the three-dimensional integral image is optimally determined depending on the distance between the focal plane of the two dimensional aspectograms and the focal plane of the micro-lens array.

Therefore, the projector 2 adjusts the distance of said two planes corresponding to the magnifying power to display three-dimensional integral image having an optimum resolution, comfortable view feeling and three-dimensional depth feeling.

Finally, the present invention addresses the conventional problem that the resolution and the size of the three-dimensional integral image are contrary to each other.

That is, the related arts have the problem, the higher resolution, the smaller size of the three-dimensional integral image while the larger three-dimensional integral image, the lower resolution. The present invention addresses the problem by simultaneously adjusting the magnifying power and the focal distance of the three-dimensional integral image.

Further, the present invention can save costs for manufacturing the micro-lens array by optimizing the number and the size of the micro-lens using the above property.

A diffused screen can be additionally used to heighten the effect.

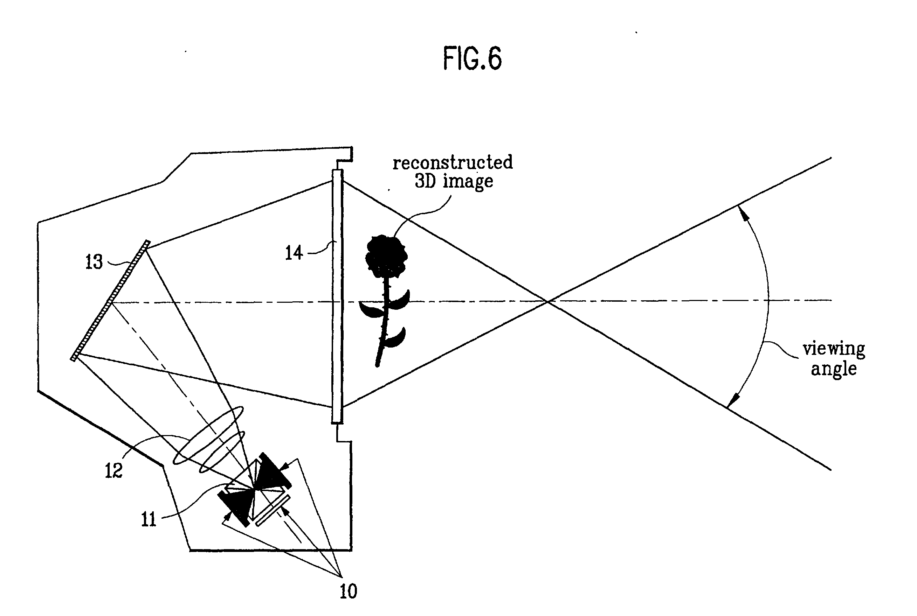

FIG. 5 is a sketch view showing a three-dimensional integral image display system according to another embodiment. The diffused screen 5 for enlarging two dimensional aspectograms is arranged between the projector 2 and the micro-lens array 3 shown in FIG. 5. Here, the diffused screen 5 is placed within the focal plane of the two dimensional aspectograms.

In this embodiment, in which the diffused screen 5 is arranged between the projector 2 and the micro-lens array 3, the displayed three-dimensional integral image provides more enlarged viewing angle and more comfortable view feeling as compared with the first embodiment of the present invention.

The present invention is applicable to a real-time television, three-dimensional integral image game, CAD/CAE, a simulation system, medical service and a three-dimensional integral image system for the specific purpose.

FIG. 6 is a cross section view showing a television structure applying the system of FIG. 4. The television applying the basic system in accordance with the present invention shown in FIG. 6 includes liquid crystal display panels 10, a prism-cube 11, a projection objective 12, a mirror 13, and a micro-lens array 14.

The operation is described as below in brief. If two dimensional aspectograms are displayed on the liquid crystal display panels 10, the two dimensional aspectograms are bent through the prism-cube 11.

The bent two dimensional aspectograms are projected through the projection objective 12, the projected two dimensional aspectograms are deflected by the mirror 13 and thereafter the two dimensional aspectograms are synthesized by the micro-lens array, thereby reconstructing a three-dimensional integral image. Users can see a three-dimensional integral image reconstructed from the television at a constant distance.

The advantages of the three-dimensional integral image display system in accordance with the present are set out hereinbelow.

First, the three-dimensional integral image display system in accordance with the present invention displays the three-dimensional integral image having the higher resolution and the deeper depth from the real-time two-dimensional integral image. Second, the three-dimensional integral image display system in accordance with the present invention simultaneously controls the resolution and the size of the three-dimensional integral image. Third, the three-dimensional integral image display system in accordance with the present invention minimizes the manufacturing costs by optimizing the micro-lens number of the micro-lens array. Fourth, the three-dimensional integral image display system in accordance with the present invention enlarges the viewing angle and provides comfortable view feeling by additionally arranging the diffused screen.

## Claims

1. A three-dimensional integral image display system comprising:
a plurality of two dimensional aspectograms displayed in real time;
a projector for projecting the plurality of two dimensional aspectograms after adjusting a magnifying power and a focal distance; and
a micro-lens array for reproducing 3 dimensional integral image by combining the plurality of two dimensional aspectograms projected from the projector.

2. The three-dimensional integral image display system of claim 1, further comprises a diffused screen for, placed between the projector and the micro-lens array, enlarging the plurality of two dimensional aspectograms.

3. The three-dimensional integral image display system of claim 2, wherein the diffused screen is placed within a focal plane of the plurality of two dimensional aspectograms.

4. A three-dimensional integral image display system comprising:
a display section for displaying a plurality of two dimensional aspectograms;
a prism section for bending the plurality of two dimensional aspectograms displayed in the display section;
a projection section for projecting the plurality of two dimensional aspectograms bended in the prism section ;
a mirror section for reflecting the plurality of two dimensional aspectograms projected from the projection section; and
a micro-lens array for reproducing three-dimensional integral image by combining the plurality of two dimensional aspectograms reflected from the mirror section.

5. The three-dimensional integral image display system of claim 4, wherein the display section is a liquid crystal display panel.

6. The three-dimensional integral image display system of claim 4, further comprises a diffused screen for, placed between the projector and the micro-lens array, enlarging the plurality of two dimensional aspectograms

7. The three-dimensional integral image display system of claim 6, wherein the diffused screen is placed within a focal plane of the plurality of two dimensional aspectograms.
